# EUROPEAN PATENT APPLICATION

(11) **EP 4 741 466 A1**
(43) Date of publication of application: **13.05.2026**
(21) Application number: 25213048.9
(22) Date of filing: 03.11.2025
(51) Int. Cl.: C09J 5/04, F16B 13/00

(54) **METHOD FOR ATTACHING A PRE-GLUED JOINT DOWEL TO A PANEL**

(30) Priority: 08.11.2024 IT 202400025122
(71) Applicant: SCM Group S.p.A., 47921 Rimini (RN) (IT)
(72) Inventor: BASSI, Enrico, 47921 RIMINI (RN) (IT); PACCIONE, Vincenzo, 47921 RIMINI (RN) (IT); CECCARELLI, Paolo, 47921 RIMINI (RN) (IT)
(74) Representative: Tiburzi, Andrea

(57) **Abstract**

The present invention relates to a method for attaching a pre-glued joint dowel (S) to a panel (P).

Said pre-glued joint dowel (S) is a joint dowel on which an amount of glue, activatatable by an activating substance, has been applied, wherein the activating substance is a gel or a sol or a foam or an emulsion,
Said method comprising the following steps:
A) creating a hole (H) on a surface of said panel (P)
B) inserting said activating substance (G) into said hole (H) to activate at least a portion of said amount of glue in contact with said activating substance;
C) inserting said pre-glued joint dowel (S) into said hole (H) such that an end portion of said pre-glued joint dowel (S) is received by said hole (H), so that an amount of said activating substance (G) contacts a portion of said amount of glue and activates said portion of said amount of glue, allowing said pre-glued joint dowel (S) to be attached to said panel (P).

## Description

The present invention relates to a method for attaching a pre-glued joint dowel to a panel.

In particular, the invention relates to a method comprising a step of creating a hole, preferably a blind hole, on a surface of said panel and a step of inserting into said hole an activating substance to activate an amount of glue, placed on the outer surface of said pre-glued joint dowel, to attach said pre-glued joint dowel to said panel.

The expression "joint dowel" refers to a pin that serves to join two pieces or two panels together.

In general, the shape of the pin is cylindrical.

However, the shape of the pin can be different from the cylindrical shape.

For example, the pin may have a tapered shape.

Furthermore, said pin may be provided with grooves on its outer surface.

In particular, such a pin comprises a first end portion and a second end portion.

The first end portion of the pin is to e inserted into a first hole of a first panel.

To couple said first panel to a second panel, the second end portion of the pin is to be inserted into a second hole in a second panel.

In general, the pin is made of wooden material, such as beech wood.

Said joint dowel can be pre-glued or not.

The expression "pre-glued joint dowel" means a joint dowel on which an amount of glue has been applied and is activatable when it contacts an activating substance.

With reference to the amount of glue, said amount of glue has been applied to the outer surface of said joint dowel.

Pertanto, uno strato di colla riveste la superficie esterna della spina di giunzione.

Therefore, a glue layer coats the outer surface of the joint dowel.

With reference to the activating substance, said activating substance can be a gel or a sol or a foam or an emulsion.

In the present patent application, reference will be made exclusively to a pre-glued joint dowel.

The diameter of a joint dowel is sized based on the diameter of the holes in the panels to be coupled.

The diameter of the holes in the panels is sized based on the thickness of the panels.

In particular, the diameter of a joint dowel should not be larger relative to the diameter of the hole to avoid weakening one or both panels, nor smaller relative to the diameter of the hole to avoid an unstable coupling between the two panels.

Furthermore, in the embodiment that will be described below, reference will be made to an activating substance which is a gel.

However, the same advantages can be achieved with an activating substance that is a sol or a foam or an emulsion.

### Prior art

It is known to couple two panels via a joint dowel.

In a first case, when the joint dowel to couple two panels is not a pre-glued joint dowel, it is known that before inserting a respective end portion of the joint dowel into a respective hole of a respective panel, a respective an amount of glue is inserted into each hole of said two panels.

In this way, once an end portion of the joint dowel is inserted into a hole in a panel, said joint dowel is attached to said panel.

In a second case, when the joint dowel to couple two panels is a pre-glue joint dowel, a respective amount of water is inserted into a respective hole of said two panels.

The contact between an end portion of the pre-glued joint dowel and the water present in the hole "activates" the amount of glues present on the outer surface of said pre-glued joint dowel.

In other words, the water is an activating substance capable of activating the amount glue on the outer surface of the pre-glued joint dowel.

A disadvantage is that when an end portion of a pre-glued joint dowel is inserted into a hole, a pressure is exerted by the pre-glued joint dowel on at least a portion of the said amount of water present within the hole.

This pressure pushes said portion of said amount of water to the bottom of the panel hole.

As a result of the pressure exerted by the joint dowel on said part of said amount of water, the water is predominantly absorbed by the surface of the panel, without properly activating the amount of glue on the outer surface of the pre-glued joint dowel.

### Aim of the invention

Aim of the present invention is to overcome said disadvantage by providing a method of attaching a pre-glued joint dowel to a panel, in order to reduce the amount of activating substance that is absorbed by a surface of said panel.

### Object of the invention

It is object of the invention a method for attaching a pre-glued joint dowel, wherein said pre-glued joint dowel is a joint dowel to which an amount of glue activatable by an activating substance has been applied and said activating substance is a gel or a sol or a foam or an emulsion.

Said method comprises the following steps:
A) creating a hole on a surface of said panel;
B) inserting said activating substance G into said hole to activate at least a portion of said amount of glue in contact with said activating substance;
C) inserting said pre-glued joint dowel S into said hole such that an end portion of said pre-glued joint dowel is received by said hole, so that an amount of said activating substance contacts a portion of said amount of glue and activates said portion of said amount of glue, allowing said pre-glued joint dowel to be attached to said panel.

Preferred embodiments of the method are described in the dependent claims.

### Figure list

The present invention will be now described, for illustrative, but not limitative purposes, according to one of its embodiments, making particular reference to the enclosed figures, wherein:
Figure 1 shows a flow chart of the method for attaching a pre-glue joint dowel to a panel, according to the invention;
Figure 2 is a side view of a pre-glued joint dowel;
Figure 3 is a sectional side view of a panel, wherein a blind hole has been created in a surface in said panel to receive an end portion of the pre-glued joint dowel shown in Figure 2;
Figure 4 is a sectional side view of the panel shown in Figure 3, wherein an amount of gel has been inserted into said blind hole for attaching said pre-glued joint dowel to said panel;
Figure 5 is a sectional side view of the panel shown in Figure 4, wherein a pre-glued joint dowel has been inserted into said blind hole and an amount of gel contacts an amount of glue present on the end portion of said pre-glued joint dowel, so that said amount of glue is activated by said amount of gel and allows the pre-glued joint dowel to be attached to the panel;
Figure 6 shows an ejecting unit for ejecting pre-glued joint dowels and activating substance;
Figure 7 shows a mixing device to obtain an activating substance which is a gel.

### Detailed description of the invention

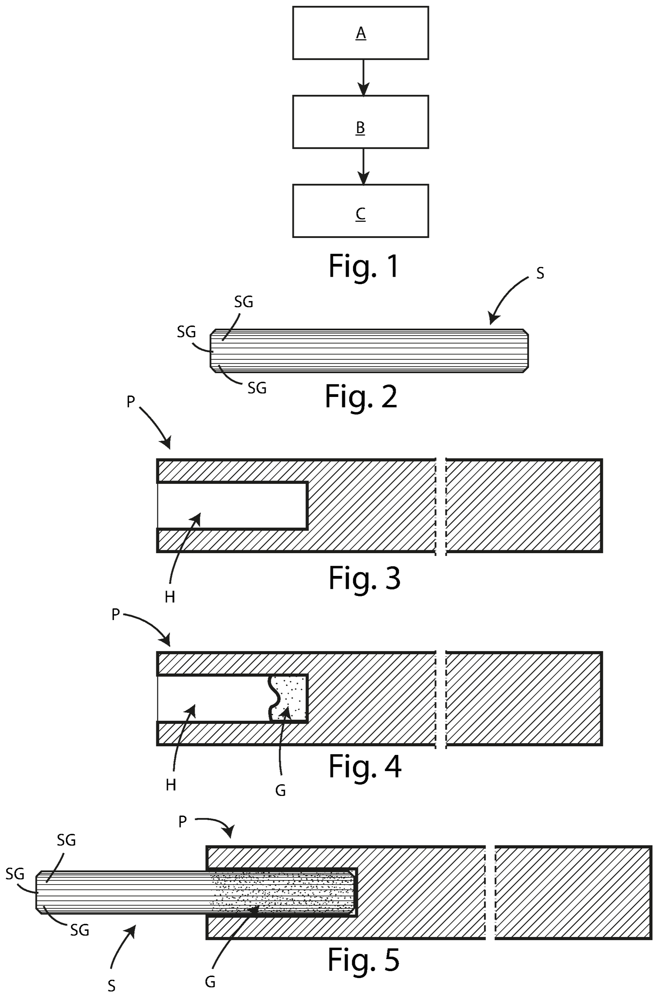

With particular reference to Figure 1, a method for attaching a pre-glued joint dowel S to a panel P.

In the example that is described, said panel P is a wooden panel.

Said pre-glued joint dowel S is a joint dowel on which an amount of glue has been applied.

Said amount of glue is activatable through an activating substance G.

In particular, said amount of glue is activatable by contact with said activating substance G.

In other words, said activating substance G is an activator of the amount of glue present on the pre-glued joint dowel S.

Figure 2 shows an example of a pre-glued joint dowel S.

The pre-glued joint dowel S is provided with a plurality of grooves SG.

The pre-glued joint dowel S comprises an outer surface and the grooves SG of said plurality of grooves SG are arranged on said outer surface.

In particular, said pre-glued joint dowel S comprises a body that develops along a longitudinal axis.

Therefore, the grooves SG of said plurality of grooves SG are longitudinal grooves.

Returning to the method, said method comprises the following steps:
A) creating a hole H on a surface of said panel (P);
B) inserting said activating substance G into said hole H to activate at least a portion of said amount of glue in contact with said activating substance G;
C) inserting said pre-glued joint dowel S into said hole H such that an end portion of said pre-glued joint dowel S is received by said hole H, so that an amount of said activating substance G contacts a portion of said amount of glue and activates said portion of said amount of glue, allowing said pre-glued joint dowel S to be attached to said panel P.

In the example that is described, said hole H is a blind hole.

Furthermore, in the example that is described, said activating substance is a gel.

In a variant not shown in Figures, the gel can be a gel in spheres.

The number of spheres can be any number, event a single spere.

The diameter of one or more spheres to be inserted into hole H is chosen based on the size of the hole itself.

Although in the example that is described the activating substance is a gel, said activating substance G can be a gel or a sol or a foam or an emulsion, without departing from the scope of the invention.

Figure 3 shows the panel P with a hole H (i.e. a blind hole).

The hole H has been created on a surface of the panel.

Figure 4 shows an amount of activating substance G inserted into the hole H of the panel P.

Figure 5 shows the pre-glued joint dowel S inserted into the hole of panel P.

An end portion of the pre-glued joint dowel S is inserted into the hole H of the panel.

An amount of the activating substance G present into the hole H contacts a portion of the amount of glue present on the end portion of the pre-glued joint dowel.

The contact between the activating substance G present into the hole H and a portion of the amount of glue present on the pre-glued joint dowel S allows the activation of said amount glue.

As can be seen from Figure 5, the activating substance G present in the hole H of the panel P, tends to distribute itself at least partially on the end portion of the pre-glued joint dowel S inserted in said hole H.

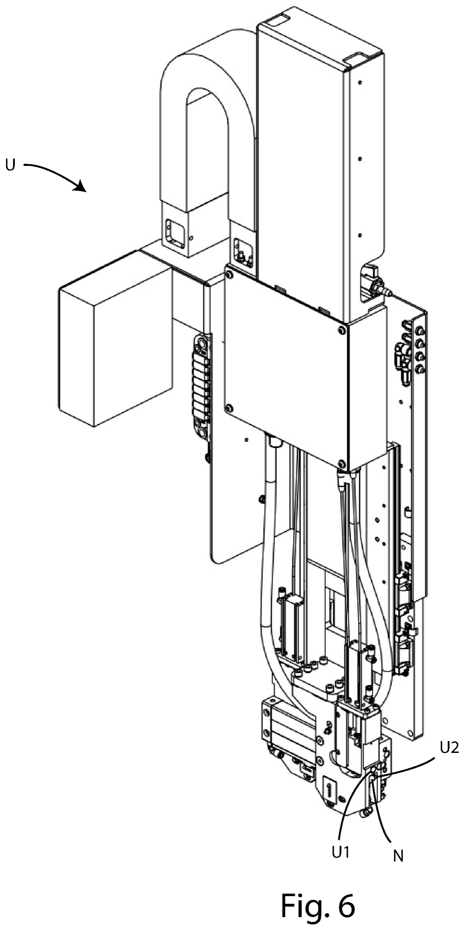

Figure 6 shows an ejecting unit U for ejecting pre-glued joint dowels and activating substance.

Said ejecting unit U comprises a first outlet U1 for a pre-glued joint dowel S and a second outlet U2 for the activating substance G.

The second outlet U2 is included in a nozzle N of said ejecting unit U.

However, it is not necessary to use the ejecting unit U for ejecting a pre-glued joint dowel S and an activating substance G into the hole H of a panel P.

For example, in a first alternative, a pre-glued joint dowel S or an activating substance G can be manually inserted into the hole H of the panel P.

In a second alternative, a pre-glued joint dowel S and an activating substance G can be manually inserted into the hole H of the panel P.

Returning to the activating substance G, in the example that is described, the activating substance G is a gel.

In particular, in the example that is described, the gel comprises a polymer Q and a fluid F.

Said polymer Q may be a superabsorbent polymer.

Said fluid can be water.

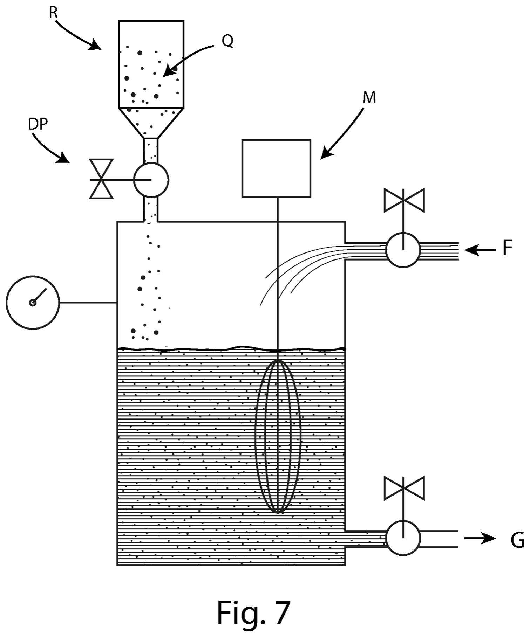

Said gel can be obtained through a mixing device, shown in Figure 7.

The mixing device comprises:
- a receptacle R for receiving am amount of polymer Q,
- a tank T for receiving an amount of fluid F, wherein said tank T is fluidly coupled to said receptacle R in such a way that the amount of polymer Q at the exit of said receptacle R falls into said tank T,
- a dispenser DP arranged between said receptacle R and said tank T,
- a mixer M for mixing said polymer G and said fluid (F).

In particular, said gel can be obtained through the following steps:
providing a mixing device as described above,
inserting an amount of polymer Q in said receptacle R,
inserting an amount of fluid F in said tank T,
dosing, through said dispenser DP, the amount of polymer Q at the exit of the receptacle R based on the amount of fluid F present in said tank T,
mixing said polymer Q and said fluid F present in said tank T using said mixer M.

As mentioned above, polymer Q can be a superabsorbent polymer.

Furthermore, said fluid F can be water.

### Advantages

Advantageously, the method object of the invention allows a pre-glued joint dowel to be attached to a panel by means of an activating substance capable of activating an amount of glue present on the outer surface of said pre-glued joint dowel S, reducing the amount of activating substance which is absorbed by a surface of said panel.

The present invention has been described for illustrative, but not limitative purposes, according to its preferred embodiments, but it is to be understood that variations and/or modifications can be carried out by a skilled in the art, without departing from the scope thereof, as defined according to enclosed claims.

## Claims

1. Method for attaching a pre-glued joint dowel (S) to a panel (P), said pre-glued joint dowel (S) being a joint dowel on which an amount of glue, activatable by an activating substance, has been applied, wherein said activating substance (G) is a gel or a sol or a foam or an emulsion, said method comprising the following steps:
A) creating a hole (H) on a surface of said panel (P);
B) inserting said activating substance (G) into said hole (H) to activate at least a portion of said amount of glue in contact with said activating substance (G);
C) inserting said pre-glued joint dowel (S) into said hole (H) such that an end portion of said pre-glued joint dowel (S) is received by said hole (H), so that an amount of said activating substance (G) contacts a portion of said amount of glue and activates said portion of said amount of glue, allowing said pre-glued joint dowel (S) to be attached to said panel (P).

2. Method according to the previous claim, wherein said hole (H) is a blind hole.

3. Method according to any one of the previous claims, wherein said pre-glued joint dowel (S) is provided with a plurality of grooves (SG).

4. Method according to any one of the previous claims, wherein, when said activating substance (G) is a gel, said gel comprises a polymer (Q) and a fluid (F).

5. Method according to claim 4, wherein said polymer (Q) is a superabsorbent polymer.

6. Method according to claim 4 or 5, wherein said fluid (F) is water.

7. Method according to any one of claims 4-6, wherein said gel is obtained through the following steps:
providing a mixing device comprising: a receptacle (R) for receiving am
amount of polymer (Q),
a tank (T) for receiving an amount of fluid (F), wherein said tank (T) is fluidly coupled to said receptacle (R) in such a way that the amount of polymer (Q) at the exit of said receptacle (R) falls into said tank (T),
a dispenser (DP) arranged between said receptacle (R) and said tank (T),
a mixer (M) for mixing said polymer (G) and said fluid (F),
inserting an amount of polymer (Q) in said receptacle (R),
inserting an amount of fluid (F) in said tank (T),
dosing, through said dispenser (DP), the amount of polymer (Q) at the exit of the receptacle (R) based on the amount of fluid (F) present in said tank (T),
mixing said polymer (Q) and said fluid (F) present in said tank (T) using said mixer (M).
